# EUROPEAN PATENT SPECIFICATION

(11) **EP 3 654 749 B1**
(45) Date of publication and mention of the grant of the patent: **30.06.2021**
(21) Application number: 18737425.1
(22) Date of filing: 02.07.2018
(51) Int. Cl.: A01C 7/04

(54) **MATERIAL DISPENSING DEVICE FOR AGRICULTURAL MACHINERY**
MATERIALABGABEEINRICHTUNG FÜR LANDWIRTSCHAFTLICHE MASCHINEN
DISPOSITIF DE DISTRIBUTION DE MATÉRIAU AMÉLIORÉ POUR MACHINES AGRICOLES

(30) Priority: 19.07.2017 IT 201700082167
(43) Date of publication of application: 27.05.2020
(73) Proprietor: Matermacc S.p.A., 33078 San Vito al Tagliamento (PN) (IT)
(72) Inventor: BRAGATTO, Enrico, 30021 Caorle (VE) (IT)
(74) Representative: Petraz, Gilberto Luigi
(86) International application number: PCT/IB2018/054897
(87) International publication number: WO 2019/016635

(56) References cited:
- EP-A1- 2 683 231
- WO-A1-2015/158900
- US-A1- 2014 352 588

## Description

### TECHNICAL FIELD

This invention relates to a dispensing device for agricultural machinery that dispenses material, in particular that dispenses seeds in soil.

### PRIOR ART

As is known, in automated agriculture the use of agricultural machinery, whether tractor-mounted or self-propelled, is widespread and is intended for dispensing material such as, for example, fertilizer or seeds.

A typical example of such agricultural machinery are precision sowing machines, wherein these machines are capable of dropping one seed at a time and designed such that the spacing between two seeds planted in the soil is maintained constant.

It is indeed important to ensure that the plants grow at an equal distance apart, so that each plant has an adequate amount of soil for its growth.

Precision sowing machines comprise a plurality of planting units supported by a frame that rests on the ground via at least one wheel and is connected to a tractor for pulling the sowing machine itself.

Each sowing unit comprises at least one dispensing device provided with a chamber that has an inlet and an outlet for the seeds to be dispensed and is fluidly connected to pneumatic means that create a negative pressure inside the chamber itself.

The chamber of the dispenser is made by coupling two half-shells, with a gasket sandwiched between the two.

In general, the rotating dispensing element divides the chamber into two compartments, of which a first compartment is in communication with the inlet and the outlet of the chamber and a second compartment is in fluidic communication with the pneumatic means, wherein a gasket is sandwiched between said two compartments.

To produce a pressure variation inside the chamber, the pneumatic means can, alternately, depending on the embodiment, generate a negative pressure or positive pressure in relation to the ambient pressure, inside the chamber.

For example, depending on the embodiment, these pneumatic means may be comprised of a fan, which is mechanically connected to a power take-off on the tractor, or which may be driven by a pneumatic pump.

In addition, according to the embodiments, within the chamber there is housed a disc-shaped dispenser element, generally made from a metal material, and capable of receiving the material as a result of the negative pressure and transport it from the inlet to the outlet of the chamber until releasing a predetermined quantity of granular material in a conveyor duct, which is capable of carrying the granular material in the vicinity of the soil on which it is to be dropped.

It is to be noted that there are also dispensers that operate on the basis of a difference in pressure between the two compartments into which the dispensing disc divides the chamber of the dispenser, but instead of maintaining a negative pressure in the compartment that houses the pneumatic means, such dispensers provide pneumatic means that are configured to generate an increase in pressure in the first compartment that communicates with the inlet and outlet of the chamber, such as a pump.

In these dispensers, the dispensing element receives and temporarily holds the seeds back as a result of the increased pressure in the first compartment and transports them from the inlet to the outlet of the chamber until a predetermined quantity is released on the soil on which it is to be dropped.

One of the drawbacks with conventional dispensing devices lies in the fact that the rotation movement of the dispensing disc wears out the dispensing disc itself and the gasket, in that the dispensing disc is kept pressed against the gasket when it rotates, precisely due to the pressure values used during operation.

Wear to the dispensing disc and the gasket causes poor sowing because in such conditions the proper pressure values inside the dispenser chamber cannot be maintained.

Maintaining the correct pressure values within the distributor chamber is, in fact, essential for the proper operation of the dispensing device.

This is also the case in dispensers that provide a pump or other pneumatic means to increase the pressure in the first compartment where absence of fluidic seal between the two compartments may cause an insufficient pressure in the first compartment of the chamber.

In any case, if the proper pressure value is not maintained in the dispenser chamber, the seeds do not remain attached to the dispensing disc or, if the air loss is not excessive they attach with a weak force to the holes thereof.

On the other hand if the pressure is excessive it is difficult for the seeds to detach from the seed plate and as a result they drop to the ground with delay.

Therefore, the seeds will be sown poorly because they will be distributed unevenly on the soil.

However the effects of such wear become manifest at a later time, when the plants begin to grow and it is noticed that their distance from each other is not as precise as expected, in other words when it is definitely too late.

To avoid this problem, there is the possibility of performing preventive maintenance on the sowing machine and measuring the thickness of the seed plate using precision instruments, being these operations however costly and involving downtime.

WO 2015/158900 A1 discloses a material dispensing device according to the preamble of claim 1, wherein the sealing gasket comprises impressions which can be checked by an operator and provide a visual indication of wear.

It is, therefore, the purpose of this invention to provide a system to detect, in real time, the state of fluidic seal between the two compartments of the dispensing device.

An additional purpose is to provide a system that enables action to be taken in the event of problems with the hermetic seal of the gasket and/or dispensing disc.

Such purposes are achieved by the characteristics of the invention set forth in the independent claim. The dependent claims outline preferred and/or particularly advantageous aspects of the invention.

### DISCLOSURE OF INVENTION

An embodiment of the invention, particularly, provides a material dispensing device for an agricultural machine comprising a chamber having an inlet and an outlet for the material that is to be dispensed, pneumatic means to create a pressure variation inside the chamber, a rotating dispensing element that divides the chamber into two compartments, wherein the first compartment is in communication with the inlet and the outlet of the chamber and a second compartment is in fluidic communication with the pneumatic means, wherein the first and the second compartment are separated by a gasket, the rotating dispensing element being capable of receiving the material as a result of the pressure value inside the chamber and transporting it from the inlet to the outlet of the chamber.

According to the invention, the dispensing device comprises at least one sensor configured to detect a parameter indicative of the fluidic seal between the first and the second compartment.

As a result of this solution, continuous monitoring of the state of fluidic seal between the two compartments of the dispensing device is achieved.

According to an aspect of the invention, the sensor configured to detect a parameter indicative of the fluidic seal between the first and the second compartment is an inductive-type sensor configured to measure a reduction in thickness of the gasket.

An advantage of this embodiment is that by measuring the wear level of the gasket, it is possible to improve the monitoring of the proper operation of the dispensing device.

According to another aspect of the invention, the sensor that measures a reduction in thickness of the gasket provides for a plurality of wearing elements drowned in the gasket the progressive wear of which modulates a signal representative of the reduction in thickness of the gasket.

This embodiment has the advantage of making an electronic system for real-time control of the reduction in thickness of the gasket possible.

An additional embodiment of the invention provides for the connection of the control unit to an optical and/or acoustic warning device configured to be activated if the thickness reduction value measured by the relevant sensor on the gasket is greater than a pre-set threshold value.

This embodiment has the advantage of warning the operator of the agricultural machine as soon as there is a failure in the system that, under normal conditions, ensures the proper pressure values in the dispenser chamber, precisely because the hermetic seal of the chamber is impaired by a worn gasket, thereby preventing the operator from proceeding with a low-quality sowing.

According to another aspect of the invention, the sensor configured to detect a parameter indicative of the fluidic seal between the first and the second compartment is a capacitive- or inductive-type sensor configured to measure the reduction in thickness of the rotating dispensing element.

In the operation of the invention, the sensor operates via the gasket, detecting the thickness of the metal dispensing disc.

In another embodiment of the invention the sensor configured to measure the reduction in thickness of the rotating dispensing element is connected to a control unit that receives from said sensor a signal representative of the reduction in thickness of the rotating dispensing element.

This embodiment has the advantage of making an electronic system for real-time control of the reduction in thickness of the rotating dispensing element possible.

Another embodiment of the invention provides for the connection of the control unit to an optical and/or acoustic warning device configured to be activated if the thickness reduction value measured by the relevant sensor on the rotating dispensing element is greater than a pre-set threshold value.

This embodiment has the advantage of warning the operator of the agricultural machine as soon as there is a failure in the system that, under normal conditions, ensures the proper pressure values in the dispenser chamber, precisely because the hermetic seal of the chamber is impaired by a worn dispensing disc, thereby preventing the operator from proceeding with a low-quality sowing.

According to an additional aspect of the invention, the control unit is configured to communicate the values received from the sensor to a remote server.

This embodiment has the advantage of enabling the collection of data from each agricultural sowing machine and scheduling of the maintenance thereof.

The invention additionally has as an object a sowing machine comprising a material dispensing device to which a dispensing disc wear sensor and/or a gasket wear sensor is associated.

### BRIEF DESCRIPTION OF DRAWINGS

Further characteristics and advantages of the invention will be more apparent from the following description, given by way of non-limiting example, with the aid of the drawings in the annexed tables.
- figure 1 is a front view of a dispensing device in accordance with the invention;
- figure 2 is a view along section A-A of figure 1 of the device in accordance with the invention;
- figure 3 represents a seed dispensing disc belonging to the device of figures 1 and 2.
- figure 4 is a detail of the embodiment of the invention represented in figure 1; and
- figure 5 is a detail of the embodiment of the invention represented in figure 2.

### BEST MODE FOR CARRYING OUT THE INVENTION

With particular reference to these figures, a dispensing device is globally indicated with 100, some known elements of said dispensing device being only schematically shown with dashed lines.

The dispensing device 100 comprises a casing 101 which is internally hollow and capable of defining a chamber 110 within it, said chamber being capable of accommodating a dispensing disc 120 for the material to be dispensed, for example, seeds, as will be better described hereafter.

For the sake of simplicity the invention will be described in reference to a type of dispensing device that uses pneumatic means to generate negative pressure inside the chamber 110, it being understood that the inventive concepts illustrated herein can also apply to dispensers that instead use pneumatic means to generate an increase in pressure in said chamber, for example a pump (not represented for the sake of simplicity). More generally speaking, the pneumatic means are configured to generate a variation of pressure inside the chamber (110).

Where necessary, any construction differences that are applicable to the dispensers provided with pneumatic means to generate an increase in pressure in chamber 110 will be indicated hereafter for completeness.

The casing 101 is defined by a first half-shell 102 and a second half-shell 103 capable of being joined together in order to define chamber 110.

In particular, each half-shell 102,103 is defined by a substantially concave body and can be placed with the concave portion directed towards the other half-shell 102,103.

Moreover, the first half-shell 102 comprises a perimeter flange (not represented for the sake of simplicity) that can be coupled and fixed by suitable fixing means, which are in themselves known, to the perimeter flange 104' of the second half-shell 103, for example via a gasket 300 interposed between them.

In use, the casing 101 is disposed in a vertical position wherein the plane of the perimeter flanges is substantially parallel to the vertical, hereafter the terms upper and lower will be used in reference to said position.

The first half-shell 102 comprises a loading hopper 105 obtained in an upper portion of said half-shell and associated to a seed-containing tank (not represented for the sake of simplicity), for the entry of the seeds into the chamber 110, said tank overlying the device 100.

The loading hopper 105 is defined by a chute 115 facing towards the lower portion of the first half-shell 102.

The first half-shell 102 also comprises a lower protrusion capable of defining, in combination with an equivalent part in the second half-shell 103, an outlet channel 106 through which the seeds exit the chamber 110 towards the soil.

The seed outlet channel 106 is connected to a tube, which is not shown, having an end distal from the chamber 110 and to discharge the seed in a previously created furrow.

Moreover, the first half-shell 102 comprises a through hole 107, for example, obtained in an upper portion of the first half-shell 102 itself, for the entry of atmospheric air being sucked in via suitable pneumatic means that are in themselves known.

The through hole 107 is advantageously connected, via a suitable tube, to a filter external to the casing 101.

Moreover, the first half-shell 102 can comprise an additional opening closed with a perforated grating (not shown for the sake of simplicity) said opening enabling the passage of air between the inside and the outside of the chamber 110 (especially the suction of air in chamber 110) during operation of the dispensing device 100.

The second half-shell 103 comprises an opening 108, for example made in a perimeter portion of the second half-shell 103 itself, to which said pneumatic means are connected for the generation of a negative pressure inside the chamber 110.

The pneumatic means comprise an intake duct 130 associated to the chamber 110 at the opening 108.

The intake duct 130 is defined, for example, by a flexible rubber pipe having a first end fixed to the second opening 108 of the chamber 110 and a second end fixed to appropriate pneumatic means in themselves known.

The opening 108 is preferably made in a position such that it is distal to the outlet channel 106 when the two half-shells 102,103 are joined together such that the opening 108 itself and the outlet channel 106 are different and distinct from each other.

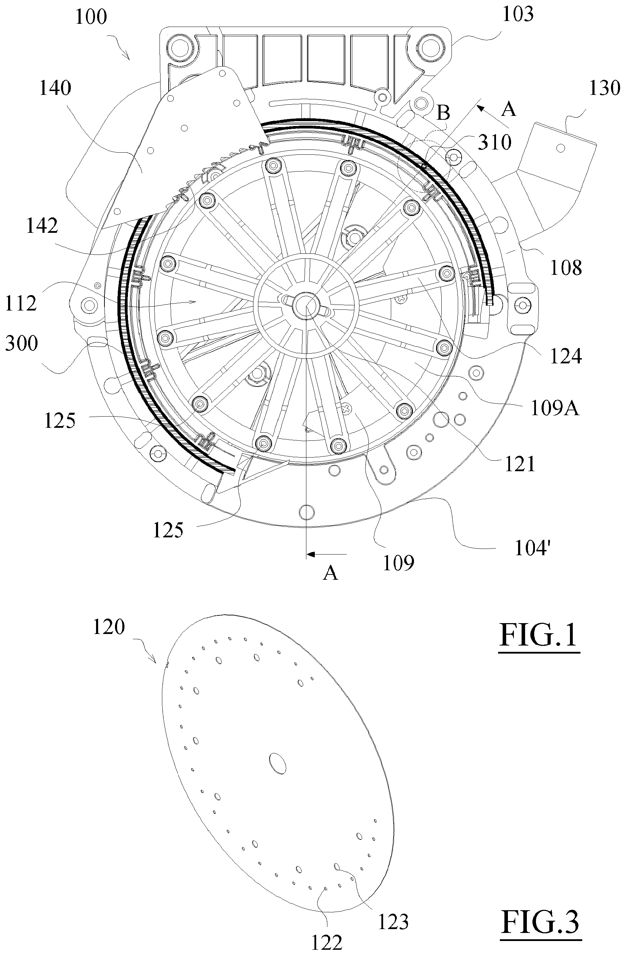

As can be better seen in figure 1, a diversion duct 109 for the air drawn by the pneumatic means is obtained in the second half-shell 103, wherein the former is in communication with the opening 108.

The diversion duct 109 lies on a plane substantially parallel to the plane of the flange of the first half-shell 102 and comprises an end at the opening 108 and an opposite end directed towards the lower portion (in use) of the second half-shell 103, i.e. the portion of the second half-shell 103 proximal to the outlet channel 106 when the two half-shells 102,103 are joined together.

The diversion duct 109, for example with a rectangular cross-section, communicates with the opening 108 of the second half-shell 103 at one end, and it is open on a plane substantially perpendicular to the plane of the flange of the first half-shell 102 at the other end, while it is closed on the plane parallel to the plane of said flange, for example by a plate 109A.

In the embodiment shown in the figures, the diversion duct 109 is substantially in the shape of an arc of a circle and follows the perimeter edge of the concavity of the second half-shell 103.

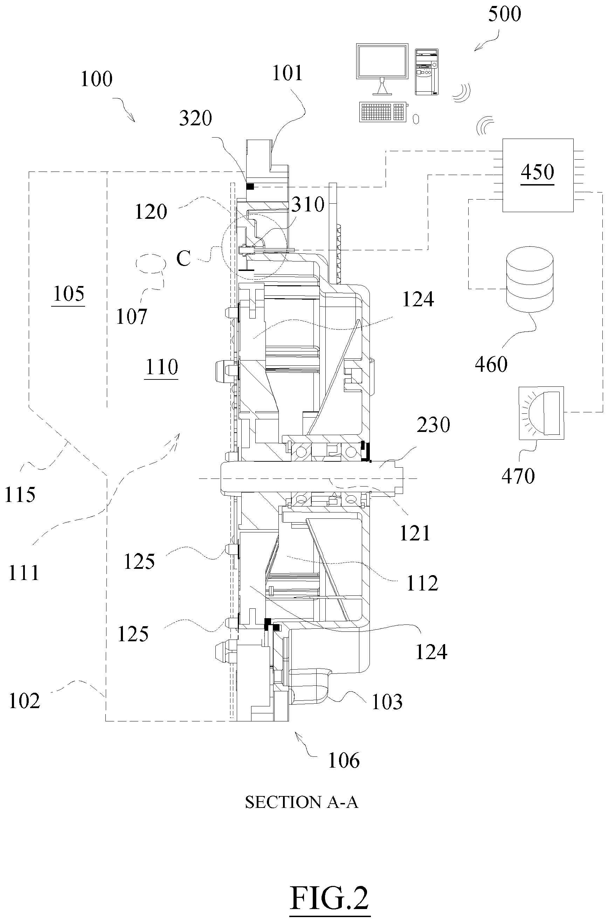

With specific reference to figure 2, the dispensing disc 120 that is housed inside the chamber 110 can be seen by the dashed line said dispensing disc being capable of collecting the material and carrying it from the loading hopper 105 to the outlet channel 106.

The dispensing disc 120 is housed in the chamber 110 so that it lies on a plane parallel to the plane of the flanges of the dispensing device 100 and it substantially occupies the entire volume of the chamber 110 on said plane, in other words, the edges of the dispensing disc 120 are substantially flush with the internal walls of the chamber 110.

Furthermore, the dispensing disc 120 is housed in the chamber 110 substantially at the flanges of the dispensing device 100 i.e. away from the bottoms of the concavities of the half-shells 102,103.

In particular, the dispensing disc 120 divides the chamber 110 into two compartments 111,112 with a first compartment 111 being in communication with the loading hopper 105 and the outlet channel 106 and a second compartment 112 being in communication with the opening 108.

As illustrated in figure 3, the dispensing disc 120 is preferably defined by a disc, for example made from metal, comprising a first series of through holes 122 disposed circumferentially in relation to the dispensing disc 120 itself.

In particular, the dispensing disc 120 comprises a series of first holes 122 disposed proximal to the edge of the dispensing disc 120 itself, and a series of second holes 123 disposed distal from the edge of the disc in relation to the first holes 122.

The first holes 122 are equidistant from each other and have a diameter that is smaller than the smallest material to be dispensed, for example seeds. Similarly, the second holes 123 are also equidistant from each other.

At least one part of the first holes 122 (for example at least one) overlaps the diversion duct 109 for the air drawn by the pneumatic means, said diversion duct being in communication with opening 108 and provided in the second half-shell 103 when the dispensing disc 120 is housed in the chamber 110.

In particular, each first hole 122 is capable of overlapping the diversion duct 109 when the dispensing disc 120 itself is rotating about its own axis 121.

Inside the chamber 110 the negative pressure is transmitted from the second compartment 112 to the first compartment 111 via the first holes 122.

The dispensing disc 120 is integral and coaxially fixed to a drive plate 124 coupled to the rotating shaft 230, and in particular, the dispensing disc 120 and the drive plate 124 are fixed together sequentially along the axis 121 of the rotating shaft 230, for example at one of the ends of the shaft itself, with the dispensing disc 120 being directed towards the first half-shell 102 and the drive plate 124 directed towards the second half-shell 103.

The drive plate 124 comprises, for example, a spoke-like configuration integral to the rotation shaft 121 and having a plurality of circumferentially-disposed and protruding pegs 125 along the direction parallel to the axis of the rotating shaft 121.

The pegs 125 are capable of fitting into the second holes 123 of the dispensing disc 120 in a way so as to support the dispensing disc 120 itself. In particular, the pegs 125 are capable of protruding from the dispensing disc 120 towards the first half-shell 102.

The drive plate 124 exhibits a diameter being smaller than the diameter of the dispensing disc 120 and, in particular, the first holes 122 of the dispensing disc 120 protrude beyond the perimeter edge of the drive plate 124.

The rotating shaft 230 is connected to transmission means that are capable of setting it into rotation about its own axis 121 with methods in themselves known in order to define the spacing between the seeds dispensed along the direction of forward motion on the basis of the forward speed of the agricultural machine.

Additionally, the device 100 may also comprise a selector device 140 comprising a substantially flat body disposed between the first and the second half-shell 102,103 and partially overlapping an external portion of the dispensing disc 120, in particular, overlapping the surface of the dispensing disc 120 that is directed towards the first half-shell 102.

Moreover, the selector device 140 is hinged to the casing with possibility of making small rotations about an axis substantially parallel to the plane of the flanges of the dispensing device 100, and comprises means of adjustment, of the position of the selector device 140 in relation to the dispensing disc 120 such as for example an eccentric pin (not shown) housed in a respective slot.

The selector device 140 comprises a serrated edge 142 directed towards the inside of the chamber and disposed proximal to the first holes 122 of the dispensing disc 120. The serrated edge 142 is capable of hitting the seeds dragged by the dispensing disc 120 so that a limited number of seeds is dragged as better described hereafter.

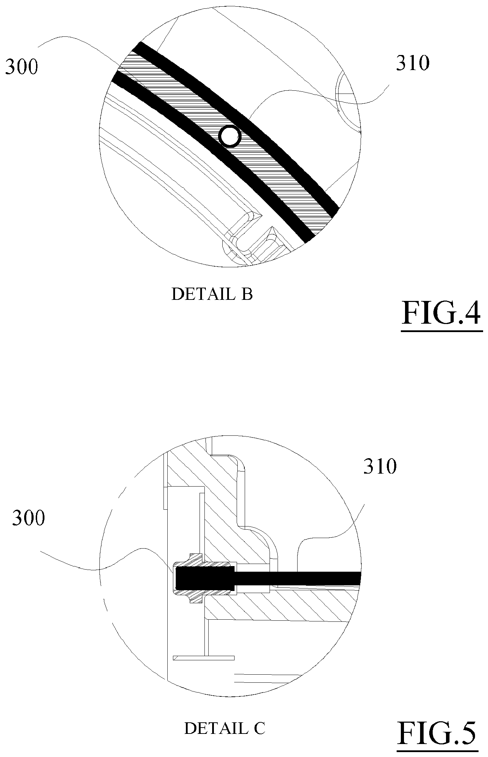

Figure 2 is a section view of an embodiment showing a sensor configured to detect the value of a parameter indicative of the fluidic seal between the first and the second compartment (111,112). In this embodiment the sensor is an inductive-type sensor 310 configured to measure a reduction in the thickness of the gasket 300 and placed in a suitable position inside the gasket 300 as seen by way of example in detail B of figure 4 and in detail C of figure 5.

Preferably, the sensor 310 is a wear sensor that provides for a plurality of disposable or wearing elements (not represented for the sake of simplicity) drowned in the gasket 300, the gradual wear of which modulates a signal representative of the reduction in thickness of gasket 300.

The sensor 310 is connected to the control unit 450 that receives from said sensor 310 the value of a parameter indicative of the fluidic seal between the first and the second compartment (111,112), i.e. in accordance with the present embodiment, a signal representative of the reduction in thickness of gasket 300.

In this case too it is possible to pre-set a wear threshold UGₜₕ for gasket 300, whereby when such threshold is exceeded, the control unit 450 can activate the optical and/or acoustic warning device 470 to generate an alarm signal and thus enable the operator to proceed with the maintenance operations.

The control unit 450 can also communicate, by way of example, the values measured by the sensor 310, via radio with technologies in themselves known, to a remote server 500 to enable, also in this case, the remote server 500 to monitor in real time the state of a plurality of dispensing devices 100 thereby intervening in the event of failures and/or managing the scheduled maintenance of the various devices.

For example the values measured by the sensor 310 can be transmitted via a transmitter connected to the control unit 450 with said transmitter being configured to receive from the control unit itself the values measured by the sensor 310.

As seen in figures 1 and 2, a sensor is further associated with the dispensing device 100 and is configured to detect the value of a parameter indicative of the fluidic seal between the first and the second compartment (111,112). In accordance with the present embodiment the additional sensor is a sensor 320 configured to measure a reduction in thickness of the rotating dispensing disc 120.

For the purposes of this invention, any capacitive- or inductive-type sensor configured to measure the reduction in thickness of the rotating dispensing element 120 is suitable.

In such position, based on known inductive or capacitive methods, the sensor 320 is in any case capable of detecting the thickness of the metal dispensing disc 120.

In fact, the thickness of the dispensing disc 120 must be kept under control.

In known embodiments, mentioned herein solely by way of non-limiting example, the thickness of said disc is equal to 0.6 mm, therefore wear of even just two tenths of a millimetre represents a very high percentage of the thickness and can compromise the operation of the seed dispenser.

Furthermore, the sensor 320 is connected to a control unit 450 that receives from said sensor 320 the value of a parameter indicative of the fluidic seal between the first and the second compartment (111,112), or rather, in accordance with the present embodiment, a signal representative of the reduction in thickness of the rotating dispensing element 120.

A processor program, for example stored in a memory unit 460, connected to the control unit 450, can use such values received from the sensor 320 according to the methods described hereafter.

The control unit 450 is also connected to an optical and/or acoustic warning device 470 configured to be activated if the thickness reduction value measured by the sensor 310 on the rotating dispensing element 120 is greater than a pre-set threshold value UDₜₕ.

Returning to the example above, a modern seed plate has a thickness equal to 0.6 mm.

This means that, up to a reduction of 0.15 mm, the hermetic seal between the disc and gasket is kept constant, the situation starts to become critical below this thickness up to a reduction value equal to 0.2 mm of wear.

When the minimum threshold value UDₜₕ is exceeded that could be precisely equal to 0.2 mm, the control unit 450 can activate the optical and/or acoustic warning device 470 to generate an alarm signal and thus enable the operator to proceed with the maintenance.

The control unit 450 can also communicate, for example via radio with technologies in themselves known, the values measured by the sensor 320 to a remote server 500.

This system enables the remote server 500 to monitor in real time the state of a plurality of dispensing devices 100 intervening in the event of failures and/or managing the scheduled maintenance of the various devices.

Both for sensor 310 and for sensor 320, pre-alarm threshold values below the values UDₜₕ and UGₜₕ respectively can be further defined.

The operation of the dispensing device 100 as described above is as follows.

During operation of the agricultural machine to which said dispensing device 100 is associated, suction means create suction from the chamber 110 through the intake duct 130.

The negative pressure is transmitted inside the chamber 110 from the second compartment 112 to the first compartment 111 through the first holes 122 and the rotary motion is transmitted with known means to the dispensing disc 120 that consequently rotates about its own axis 121.

The seeds contained in the tank enter the chamber 110 via the loading hopper 105 and, in particular, they collect at the bottom of the first compartment 111 by gravity.

Owing to the negative pressure produced in chamber 110 by the pneumatic means, the seeds adhere to the dispensing disc 120, in particular in proximity to the first holes 122, and they are dragged by it from the loading hopper 105 towards the outlet channel 106.

During rotation of the dispensing disc 120 the serrated edge 142 of the selector device 140 and the pegs 125 of the drive plate 124 hit the seeds dragged by the dispensing disc itself in order to cause the detachment of the seeds that adhere to the dispensing disc 120 with a weaker adhesion force, i.e. the seeds that adhere in proximity to, though not at the first holes 122. In that way, the number of seeds that adheres to each first hole 122 is restricted to one.

When a seed comes in proximity to the outlet channel 106, and, in particular when the respective first hole 122 is at the diversion duct, the negative pressure that enables the seed to adhere to the surface of the dispensing disc 120 ceases to act on the seed, therefore the seed falls by gravity into the outlet channel 106.

During all the steps described, the gasket wear sensor 310 communicates the data related to the wear of gasket 300 to the control unit 450.

The data can be gathered in the form of tables and/or graphs useful for statistical analysis related to the scheduled maintenance of the seed sowing devices, for example the data can be sent to the remote server 500 in advance.

In the case wherein the value of the reduction in thickness of the gasket 300 measured by the sensor 310 exceeds a pre-set threshold value UGₜₕ, a malfunction condition of the dispenser occurs due to the fact that the negative pressure that should be maintained during operation of the seed dispenser might not be reached as a result of the wear of the gasket 300.

In this case the sowing operation is interrupted.

Moreover, during all the process steps described, the sensor 320 communicates data related to the wear of the dispensing disc 120 to the control unit 450.

The data can be gathered in the form of tables and/or graphs useful for statistical analysis related to the scheduled maintenance of the seed sowing devices, for example the data can be sent to the remote server 500 in advance.

In the case wherein the value of the reduction in thickness of the rotating dispensing disc 120 measured by the sensor 320 exceeds a pre-set threshold value UDₜₕ, a malfunction condition of the dispenser occurs due to the fact that the negative pressure that should be maintained during operation of the seed dispenser might not be reached as a result of the wear of the disc 120.

In this case, too, the sowing operation is interrupted.

The invention as thus conceived is susceptible to many other possible modifications and variations all of which are within the scope of the inventive concept.

In addition all details can be replaced by other technically equivalent elements.

In practice the materials used, as well as the contingent shapes and dimensions, can be any according to requirements without departing from the scope of protection in the following claims.

## Claims

1. Material dispensing device (100) for an agricultural machine comprising:
• a chamber (110) having an inlet (105) and an outlet (106) for the material that is to be dispensed;
• pneumatic means to generate a variation of pressure inside the chamber (110);
• a rotating dispensing element (120) that divides the chamber (110) into two compartments (111,112), wherein the first compartment (111) is in communication with the inlet (105) and the outlet (106) of the chamber (110) and a second compartment (112) is in fluidic communication with the pneumatic means, wherein the first and the second compartment (111,112) are separated by a gasket (300);
• the rotating dispensing element (120) being capable of receiving the material as a result of the pressure value inside the chamber (110) and transporting it from the inlet (105) to the outlet (106) of the chamber (110),
**characterised by** the fact that the dispensing device (100) comprises at least one sensor (310,320) configured to detect a parameter indicative of the fluidic seal between the first and the second compartment (111,112).

2. Device (100) according to claim 1, wherein the sensor (310) configured to detect a parameter indicative of the fluidic seal between the first and the second compartment (111,112) is an inductive-type sensor (310) configured to measure a reduction in thickness of the gasket (300).

3. Device (100) according to claim 2, wherein the sensor (310) that measures the reduction in thickness of the gasket (300) provides for a plurality of wearing elements drowned in the gasket (300) the progressive wear of which modulates a signal representative of the reduction in thickness of the gasket (300).

4. Device (100) according to claim 2, wherein the sensor (310) that measures the reduction in thickness of the gasket (300) is connected to a control unit (450) that receives from said sensor (310) a signal representative of the reduction in thickness of the gasket (300).

5. Device (100) according to claim 4, wherein the control unit (450) is connected to an optical and/or acoustic warning device (470) configured to be activated if the thickness reduction value measured by the sensor (310) on the gasket (300) is greater than a pre-set threshold value (UGₜₕ).

6. Device (100) according to claim 1, wherein the sensor configured to detect a parameter indicative of the fluidic seal between the first and the second compartment (111,112) is a capacitive- or inductive-type sensor (320) configured to measure a reduction in thickness of the rotating dispensing element (120).

7. Device (100) according to claim 6, wherein the sensor (320) configured to measure the reduction in thickness of the rotating dispensing element (120) is connected to a control unit (450) that receives from said sensor (320) a signal representative of the reduction in thickness of the rotating dispensing element (120).

8. Device (100) according to claim 7, wherein the control unit (450) is connected to an optical and/or acoustic warning device (470) configured to be activated if the thickness reduction value measured by the sensor (320) on the rotating dispensing element (120) is greater than a pre-set threshold value (UDth).

9. Device (100) according to claims 4 and 7, wherein the control unit (450) is configured to communicate the values received from the sensor (310,320) to a remote server (500).

10. Device (100) according to claim 9, **characterised by** the fact that it comprises a transmitter, connected to the control unit, and configured to receive from the control unit (450) values of the parameter indicative of the fluidic seal between the first and the second compartment (111,112) measured by the sensor (310,320) and transmit them to a remote server (500).

11. Sowing machine comprising a material dispensing device (100) according to the preceding claims.

## Patentansprüche

1. Materialausgabevorrichtung (100) für eine landwirtschaftliche Maschine, welche aufweist:
• eine Kammer (110), welche einen Einlass (105) und einen Auslass (106) für das Material, welches auszugeben ist, hat,
• pneumatische Mittel, um eine Druckveränderung innerhalb der Kammer (110) hervorzurufen,
• ein rotierendes Ausgabeelement (120), welches die Kammer (110) in zwei Abteile (111, 112) teilt, wobei das erste Abteil (111) in Kommunikation mit dem Einlass (105) und dem Auslass (106) der Kammer (110) ist und ein zweites Abteil (112) in Fluidkommunikation mit den pneumatischen Mitteln ist, wobei das erste und das zweite Abteil (111, 112) mittels einer Dichtung (300) getrennt sind,
• wobei das rotierende Ausgabeelement (120) imstande ist, das Material aufzunehmen als ein Ergebnis des Druckwerts innerhalb der Kammer (110) und es vom Einlass (105) zum Auslass (106) der Kammer (110) zu transportieren,
**gekennzeichnet durch** die Tatsache, dass die Materialausgabevorrichtung (100) zumindest einen Sensor (310, 320) aufweist, welcher eingerichtet ist, um einen Parameter zu detektieren, welcher indikativ für die Fluiddichtung zwischen dem ersten und dem zweiten Abteil (111, 112) ist.

2. Vorrichtung (100) gemäß Anspruch 1, wobei der Sensor (310), welcher eingerichtet ist, um einen Parameter zu detektieren, welcher indikativ für die Fluiddichtung zwischen dem ersten und dem zweiten Abteil (111, 112) ist, ein Induktiv-Typ-Sensor (310) ist, welcher eingerichtet ist, um eine Dicke-Reduktion der Dichtung (300) zu messen.

3. Vorrichtung (100) gemäß Anspruch 2, wobei der Sensor (310), welcher die Dicke-Reduktion der Dichtung (300) misst, eine Mehrzahl von Verschleißelementen bereitstellt, welche in der Dichtung (300) versenkt sind, und deren fortschreitender Verschleiß ein Signal moduliert, welches für die Dicke-Reduktion der Dichtung (300) repräsentativ ist.

4. Vorrichtung (100) gemäß Anspruch 2, wobei der Sensor (310), welcher die Dicke-Reduktion der Dichtung (300) misst, mit einer Steuereinheit (450) verbunden ist, welche vom besagten Sensor (310) ein Signal empfängt, welches für die Dicke-Reduktion der Dichtung (300) repräsentativ ist.

5. Vorrichtung (100) gemäß Anspruch 4, wobei die Steuereinheit (450) mit einer optischen und/oder akustischen Warnvorrichtung (470) verbunden ist, welche eingerichtet ist, um aktiviert zu werden, falls der Dicke-Reduktion-Wert, welcher mittels des Sensors (310) an der Dichtung (300) gemessen wird, größer als ein voreingestellter Schwellenwert (UGₜₕ) ist.

6. Vorrichtung (100) gemäß Anspruch 1, wobei der Sensor, welcher eingerichtet ist, um einen Parameter zu detektieren, welcher indikativ für die Fluiddichtung zwischen dem ersten und dem zweiten Abteil (111, 112) ist, ein Kapazitiv- oder Induktiv-Typ-Sensor (320) ist, welcher eingerichtet ist, um eine Dicke-Reduktion des rotierenden Ausgabeelements (120) zu messen.

7. Vorrichtung (100) gemäß Anspruch 6, wobei der Sensor (320), welcher eingerichtet ist, um die Dicke-Reduktion des rotierenden Ausgabeelements (120) zu messen, mit einer Steuereinheit (450) verbunden ist, welche vom besagten Sensor (320) ein Signal empfängt, welches für die Dicke-Reduktion des rotierenden Ausgabeelements (120) repräsentativ ist.

8. Vorrichtung (100) gemäß Anspruch 7, wobei die Steuereinheit (450) mit einer optischen und/oder akustischen Warnvorrichtung (470) verbunden ist, welche eingerichtet ist, um aktiviert zu werden, falls der Dicke-Reduktion-Wert, welcher mittels des Sensors (320) am rotierenden Ausgabeelement (120) gemessen wird, größer als ein voreingestellter Schwellenwert (UDₜₕ) ist.

9. Vorrichtung (100) gemäß den Ansprüchen 4 und 7, wobei die Steuereinheit (450) eingerichtet ist, um die vom Sensor (310, 320) empfangenen Werte zu einem entfernten Server (500) zu kommunizieren.

10. Vorrichtung (100) gemäß Anspruch 9, **gekennzeichnet durch** die Tatsache, dass sie einen Übertrager aufweist, welcher mit der Steuereinheit verbunden ist, und welcher eingerichtet ist, um von der Steuereinheit (450) Werte des mittels des Sensors (310, 320) gemessenen Parameters, welcher indikativ für die Fluiddichtung zwischen dem ersten und dem zweiten Abteil (111, 112) ist, zu empfangen und diese zu einem entfernten Server (500) zu übertragen.

11. Sämaschine, welche eine Materialausgabevorrichtung (100) gemäß den vorherigen Ansprüchen aufweist.

## Revendications

1. Dispositif de distribution de matériau (100) pour une machine agricole comprenant :
• une chambre (110) ayant une entrée (105) et une sortie (106) pour le matériau qui doit être distribué ;
• des moyens pneumatiques pour générer une variation de pression à l'intérieur de la chambre (110) ;
• un élément de distribution rotatif (120) qui divise la chambre (110) en deux compartiments (111, 112), où le premier compartiment (111) est en communication avec l'entrée (105) et la sortie (106) de la chambre (110) et un second compartiment (112) est en communication fluidique avec les moyens pneumatiques, où le premier et le second compartiment (111, 112) sont séparés par un joint (300) ;
• l'élément de distribution rotatif (120) étant capable de recevoir le matériau en raison de la valeur de pression à l'intérieur de la chambre (110) et de le transporter de l'entrée (105) à la sortie (106) de la chambre (110),
**caractérisé par le fait que** le dispositif de distribution (100) comprend au moins un capteur (310, 320) configuré pour détecter un paramètre indicatif du joint fluidique entre le premier et le second compartiment (111, 112).

2. Dispositif (100) selon la revendication 1, où le capteur (310) configuré pour détecter un paramètre indicatif du joint fluidique entre le premier et le second compartiment (111, 112) est un capteur de type inductif (310) configuré pour mesurer une réduction d'épaisseur du joint (300).

3. Dispositif (100) selon la revendication 2, où le capteur (310) qui mesure la réduction d'épaisseur du joint (300) fournit une pluralité d'éléments d'usure noyés dans le joint (300) dont l'usure progressive module un signal représentatif de la réduction d'épaisseur du joint (300).

4. Dispositif (100) selon la revendication 2, où le capteur (310) qui mesure la réduction d'épaisseur du joint (300) est connecté à une unité de commande (450) qui reçoit dudit capteur (310) un signal représentatif de la réduction d'épaisseur du joint (300).

5. Dispositif (100) selon la revendication 4, où l'unité de commande (450) est connectée à un dispositif d'avertissement optique et/ou acoustique (470) configuré pour être activé si la valeur de réduction d'épaisseur mesurée par le capteur (310) sur le joint (300) est supérieure à une valeur de seuil prédéfinie (UGₜₕ).

6. Dispositif (100) selon la revendication 1, où le capteur configuré pour détecter un paramètre indicatif du joint fluidique entre le premier et second compartiment (111, 112) est un capteur de type capacitif ou inductif (320) configuré pour mesurer une réduction d'épaisseur de l'élément de distribution rotatif (120).

7. Dispositif (100) selon la revendication 6, où le capteur (320) configuré pour mesurer la réduction d'épaisseur de l'élément de distribution rotatif (120) est connecté à une unité de commande (450) qui reçoit dudit capteur (320) un signal représentatif de la réduction d'épaisseur de l'élément de distribution rotatif (120).

8. Dispositif (100) selon la revendication 7, où l'unité de commande (450) est connectée à un dispositif d'avertissement optique et/ou acoustique (470) configuré pour être activé si la valeur de réduction d'épaisseur mesurée par le capteur (320) sur l'élément de distribution rotatif (120) est supérieure à une valeur de seuil prédéfinie (UDₜₕ).

9. Dispositif (100) selon les revendications 4 et 7, où l'unité de commande (450) est configurée pour communiquer les valeurs reçues du capteur (310, 320) à un serveur distant (500).

10. Dispositif (100) selon la revendication 9, **caractérisé par le fait qu'**il comprend un émetteur, connecté à l'unité de commande, et configuré pour recevoir de l'unité de commande (450) des valeurs du paramètre indicatif du joint fluidique entre le premier et le second compartiment (111, 112) mesurées par le capteur (310, 320) et les transmettre à un serveur distant (500).

11. Semoir comprenant un dispositif de distribution de matériau (100) selon les revendications précédentes.
